# EUROPÄISCHE PATENTANMELDUNG

(11) **EP 2 036 872 A1**
(43) Veröffentlichungstag der Anmeldung: **18.03.2009**
(21) Anmeldenummer: 07011618.1
(22) Anmeldetag: 13.06.2007
(51) Int. Cl.: C05F 17/00

(54) **Verfahren zur mechanisch biologischen Restabfallbehandlung**

(71) Anmelder: Wilhelm Faber GmbH, 55232 Alzey (DE)
(72) Erfinder: Faber, Karl-Wilhelm, 55232 Alzey (DE); Dias Pereira, Christiane, 11600-000 Sao Sebastiao (BR)
(74) Vertreter: Grünecker, Kinkeldey, Stockmair & Schwanhäusser Anwaltssozietät

(57) **Zusammenfassung**

Die Erfindung betrifft ein Verfahren zur mechanisch biologischen Restabfallbehandlung, wobei der Abfall zunächst homogenisiert, zerkleinert und durchfeuchtet wird, danach zu einer Rottemiete auf einen Palettenboden aufgeschüttet wird, danach die Oberfläche der Rottemiete mit einer Biofilterschicht behandelt wird und der Abfall durch Belüftung aerob abgebaut wird.

Erfindungsgemäß ist vorgesehen, dass die Biofilterschicht Geotextilmaterial enthält.

## Beschreibung

Die Erfindung betrifft ein Verfahren zur mechanisch biologischen Restabfallbehandlung, wobei der Abfall zunächst homogenisiert, zerkleinert und durchfeuchtet wird, danach zu einer Rottemiete auf einen Palettenboden aufgeschüttet wird, danach die Oberfläche der Rottemiete mit einer Biofilterschicht abgedeckt und der Abfall dann durch Belüftung nach dem Kaminzugverfahren aerob abgebaut wird.

Verfahren dieser Art sind im Stand der Technik bekannt. Sie werden bereits in modernen Deponiebetrieben eingesetzt. Sie sind außerdem auch in der Patentliteratur beschrieben, so z. B. in der DE 19804018. Nach dem Aufschichten der Rottemiete erfolgt über einen längeren Zeitraum, z. B. von 9 Monaten, der aerobe Abbau des Abfalls, wobei hier das sog. Kaminzugverfahren zum Einsatz kommt. Das Kaminzugverfahren zeichnet sich dadurch aus, dass zwischen den Bodenpaletten Belüftungsleitungen verlegt werden. Wenn sich der Abfall zersetzt, erwärmt sich die Miete. Die Warmluft steigt nach oben und zieht durch die Belüftungsleitungen Luft nach, so dass praktisch eine automatische Belüftung stattfindet.

Rottemieten dieser Art werden im Stand der Technik von einer Biofilterschicht abgedeckt. In der DE 19804018 besteht die Biofilterschicht aus einer auf dem Abfall aufgebrachten Strukturschicht aus Teilchen einer bestimmten Teilchengröße, wobei ein Teil der Strukturschicht auch aus aus den Abfällen ausgesiebten Fraktionen bestehen kann.

Es hat sich nun herausgestellt, dass diese Art der Abfallbehandlung sehr vorteilhaft ist und auch die Biofilterschicht große Vorteile bringt, jedoch kann es insbesondere bei starken Regenfällen zu einem Ausschwemmen der Biofilterschicht kommen, so dass lokal die Biofilterschicht zerstört ist, andererseits sich an anderen Stellen Zusammenklebungen ergeben können, so dass die Homogenität der beeinträchtigt wird. Insbesondere über die für die Abfallbehandlung dieser Art erforderlichen langen Zeiträume (zwischen 4 Monaten und 1 Jahr) kann sich dies nachteilig bemerkbar machen.

Hier will die Erfindung Abhilfe schaffen. Gelöst wird dieses Problem bei einem Verfahren der Eingangs genannten Art dadurch, dass die Biofilterschicht eine Geotextilbahn umfasst.

Das Vorsehen einer Geotextilbahn als Teil der Biofilterschicht oder statt der Biofilterschicht führt zu einer Strukturgebung der Biofilterschicht und zu einem besseren halten der Struktur, andererseits werden die positiven Eigenschaften wie Durchlässigkeit und Schutz optimal sichergestellt. Geotextilien sind bekannter Maßen Funktionstextilien, die überwiegend im Tiefbau zum Trennen, Filtern aber auch zum Entwässern eingesetzt werden. Es gibt sie in den verschiedensten Aufbauten. Sie können aus Rohstoffen synthetischer Herkunft, wie z. B. Polypropylen, Polyester oder Polyethylen sein, sie können aber auch organischer Herkunft sein, z. B. aus Hanf oder Sisal gebildet werden. Sie können als Fleecestoffe ausgebildet sein, oder aber als Gewebe. In vorteilhafter Weise wird ein solches Geotextilmaterial verwendet, das ein Flächengewicht von 50 - 150 g / m², vorzugsweise 85 - 90 g / m² aufweist. Eine Geotextilbahn mit einer solchen Flächendichte hat die besten Eigenschaften zur Strukturgebung einerseits und trotzdem eine ausreichende Durchlässigkeit zur Belüftung.

Um die Belastungen beim Betreten der Rottemiete oder auch bei starkem Windaufkommen standhalten zu können, ist es vorteilhaft, wenn das Geotextilmaterial eine Reißfestigkeit in Längsrichtung von 550 - 650 N / 5 cm² und in Querrichtung von 500 - 600 N / 5 cm² aufweist. Die Durchlässigkeit sollte im Bereich von 0,2 - 0,5 l / sec. / m² liegen.

Geotextilbahnen gibt es in verschiedenen Größen. Vorteilhaft wird eine zusammenhängende Bahn von einer Breite von 4 m - 15 m je nach Größe der Miete zum Abdecken verwendet.

In weiterer vorteilhafter Ausgestaltung der Erfindung ist vorgesehen, dass der Palettenboden aus Paletten gebildet wird, die aus Frisch-PVC oder Recycling-Kunststoffen bestehen.

Es hat sich herausgestellt, dass aus Holz bestehende Paletten, wie man sie im Stand der Technik eingesetzt hat, in den langen Zeiträumen ebenfalls verrotten können, so dass sie die gewünschte Bodenstruktur oft nicht halten können. Bei Einsatz von Kunststoffpaletten tritt dieses Problem nicht auf.

Die Palettengröße sollte vorteilhaft bei 1,5 m x 1,5 m liegen und der Abstand der Palettenlatten, also die Rippen der Paletten sollte zwischen 5 - 15 cm betragen, damit eine ausreichende Durchlüftung von unten her, d. h. ein ausreichender Lufteintrag in die Miete gewährleistet ist.

Zwischen den Paletten können dann, wie im Stand der Technik beschrieben, geschlitzte Rohre verlaufen, um den Kaminzugeffekt sicher zu stellen.

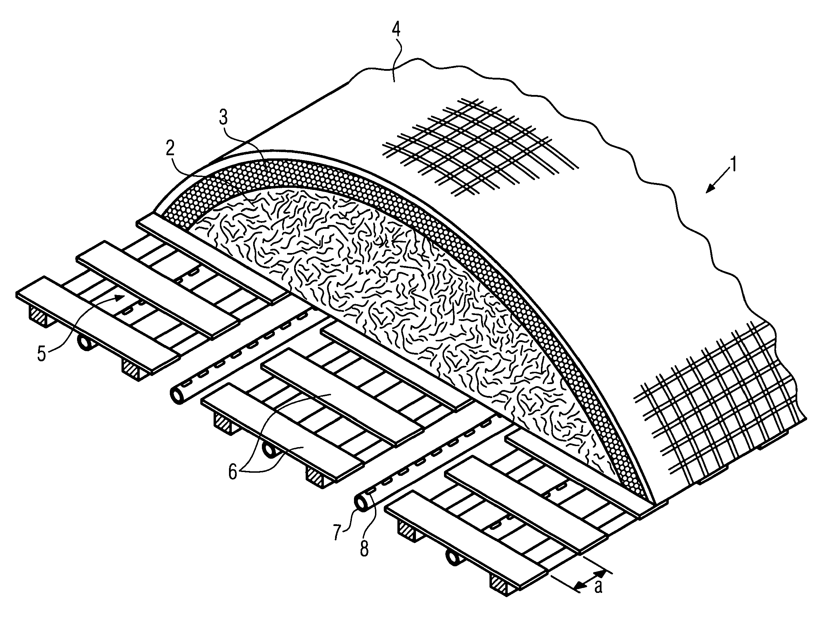

Nachfolgend wird die Erfindung anhand der Zeichnung weiter erläutert:
In der Zeichnung ist in einem perspektivischen Teilquerschnitt eine Rottemiete 1 dargestellt, wie sie erfindungsgemäß aufgebaut und betrieben wird. Man erkennt einen Boden, der aus mehreren, etwas beabstandet zueinander angeordneten Paletten 5 gebildet wird. Die Paletten weisen Palettenrippen 6 auf, die in einem Abstand a bevorzugt zwischen 5 cm und 15 cm zu einander liegen. Die Paletten sind bevorzugt aus Frisch-PVC oder recyceltem Kunststoff hergestellt, so dass sie sich auch nach längerer Zeit nicht zersetzen, andererseits beim Abbau der Miete auch umweltfreundlich entsorgt werden können.
Zwischen den Paletten verlaufen Belüftungsrohre 7, die auch aus Kunststoff bestehen können. Diese Belüftungsrohre weisen Belüftungsschlitze 8 auf und dienen dazu, Luft von unten in die Miete einzutragen.
Auf die Paletten ist die Abfallschicht 2 geschüttet. Mit Mieten dieser Art lässt sich insbesondere Restmüllabfall, wie beispielsweise Hausmüll, Sperrmüll, hausmüllähnlicher Gewerbemüll und auch Klärschlamm abbauen.

Zum Schutz vor Witterungseinwirkungen aber auch zur Verhinderung von Geruchsemissionen ist die Abfallschicht 2 durch eine Biofilterschicht 3, 4 abgedeckt. Dabei besteht die Biofilterschicht aus einer unteren Lage 3, die als Strukturschicht aus strukturfesten Teilchen wie in der DE 19804018 beschrieben, bestehen kann. Teilchen dieser Art haben eine Teilchengröße von vorzugsweise 25 - 80 mm. Auf dieser Strukturschicht kann noch eine Abdeckschicht einer Teilchengröße von < 60 mm aufgebracht sein, die in der Zeichnung nicht dargestellt ist. Diese Strukturschicht 3 wird nun von einer Geotextilbahn 4 abgedeckt. Als Geotextilbahn kann eine Geotextilbahn verwendet werden, wie sie im Handel z. B. unter der Bezeichnung MPZ oder auch Propex Do und Amoco erhältlich ist. Geotextilien dieser Art bewirken den Zusammenhalt der Miete auch bei stärkeren Wetter und Witterungseinflüssen, insbesondere auch bei starkem Wind. Andererseits haben sie genügend Poren zum Durchtritt der Luft, was für den aeroben Abbau des Abfalls wichtig ist.

### Die Rottemiete, wie sie dargestellt ist, wird wie folgt erzeugt:

Nachdem der Müll einer Eingangskontrolle unterzogen worden ist und gröbere Störstoffe entfernt worden sind, wird der Müll mechanisch vorbehandelt, indem er beispielsweise in einem Mischer homogenisiert und zerkleinert und ggf. unter Zusatz von Klärschlamm oder Sickerwasser durchfeuchtet wird. Er wird dadurch optimal für die nachfolgende biologische Behandlung aufgeschlossen.

Nachdem dann eine Unterlage aus Paletten gebildet wurde, wird der Abfall auf diese Unterlage aufgeschüttet. Hier kann durchaus eine Schütthöhe von bis zu 4 m erreicht werden. Dabei werden einzelne Hügelbahnen gebildet, die bis zu 100 m Länge haben können.

Nach dem Aufschütten des Abfalls wird dieser durch die Biofilterschicht 3,4 abgedeckt. Die Biofilterschicht kann aus strukturfesten Teilchen 3 und der Geotextilbahn 4 bestehen, es reicht aber unter Umständen auch aus, nur eine Geotextilbahn direkt auf den Abfall zu legen. Durch die Zerrottung des Abfalls entsteht im Abfall Wärme, die Warmluft steigt nach oben und zieht dann durch die Schlitze 8 der zwischen Paletten 5 und ggf. auch im Abfall selbst verlaufenden Rohre 7 Luft von außen an, so dass ein aerober Abbau möglich ist. Ggf. können die Rohre auch an Luftpumpen angeschlossen sein, so dass auch aktiv von Zeit zu Zeit Luft durch die Rohre gepumpt werden kann.

## Patentansprüche

1. Verfahren zur mechanisch biologischen Restabfallbehandlung, wobei der Abfall zunächst homogenisiert, zerkleinert und durchfeuchtet wird, danach zu einer Rottemiete auf einen Palettenboden aufgeschüttet wird, danach die Oberfläche der Rottemiete mit einer Biofilterschicht bedeckt wird und der Abfall schließlich unter Luftzufuhr aerob abgebaut wird,
**dadurch gekennzeichnet, dass**
die Biofilterschicht eine Geotextilbahn (4) umfasst.

2. Verfahren nach Anspruch 1,
**dadurch gekennzeichnet, dass** eine Geotextilbahn mit einem Flächengewicht von 50 - 150 g / m², vorzugsweise 85 - 90 g / m² verwendet wird.

3. Verfahren nach Anspruch 1 oder 2,
**dadurch gekennzeichnet, dass**
für die Geotextilbahn eine Material mit einer Reißfestigkeit in Längsrichtung von 550 - 650 N / 5 cm und in Querrichtung von 500 - 600 N /5 cm verwendet wird.

4. Verfahren nach einem der Ansprüche 1 bis 3,
**dadurch gekennzeichnet, dass**
die Durchlässigkeit des Geotextilbahn 0,2 - 0,5 l / sec. / m² beträgt.

5. Verfahren nach einem der vorangegangenen Ansprüche,
**dadurch gekennzeichnet, dass**
die Länge der Geotextilbahn 4 -15 m beträgt.

6. Verfahren nach einem der vorangegangenen Ansprüche,
**dadurch gekennzeichnet, dass**
der Palettenboden aus Paletten (5) aus Frisch-PVC oder Recycling-Kunststoff gebildet wird.

7. Verfahren nach Anspruch 6,
**dadurch gekennzeichnet, dass**
die Palettengröße 1,5 x 1,5 m beträgt.

8. Verfahren nach Anspruch 6 oder 7,
**dadurch gekennzeichnet, dass**
der Abstand (a) zwischen den Palettenrippen 5 - 15 cm beträgt.

9. Rottemiete mit folgendem Aufbau:
- Palettenboden (5)
- darauf der abzubauende Abfall (2),
- darauf eine Biofilterschicht (3,4), die wenigstens eine Geotextilbahn (4) umfasst.
